# EUROPÄISCHE PATENTSCHRIFT

(11) **EP 1 153 096 B1**
(45) Veröffentlichungstag und Bekanntmachung des Hinweises auf die Patenterteilung: **05.02.2003**
(21) Anmeldenummer: 00909215.6
(22) Anmeldetag: 18.02.2000
(51) Int. Cl.: C09F 7/02, C11C 3/00, D06N 1/00

(54) **VERFAHREN ZUR HERSTELLUNG DREIDIMENSIONAL VERNETZTER UND OXIDIERTER UNGESÄTTIGTER FETTSÄUREN UND/ODER FETTSÄUREESTER**
METHOD FOR PRODUCING THREE-DIMENSIONAL CROSS-LINKED OXIDIZED UNSATURATED FATTY ACIDS AND/OR FATTY ACID ESTERS
PROCEDE DE PREPARATION D'AGENTS RETICULES TRIDIMENSIONNELS ET D'ACIDES GRAS INSATURES OXYDES ET/OU LEURS ESTERS

(30) Priorität: 18.02.1999 DE 19906832
(43) Veröffentlichungstag der Anmeldung: 14.11.2001
(73) Patentinhaber: DLW Aktiengesellschaft, D-74321 Bietigheim-Bissingen (DE)
(72) Erfinder: BRUMM, Karen, D-28307 Bremen (DE); LAGE, Thomas, D-28816 Stuhr (DE); MAUK, Hanns-Jörg, D-74395 Mundelsheim (DE); SCHULTE, Bernd, D-27753 Delmenhorst (DE); SCHWONKE, Karl-Heinz, D-27753 Delmenhorst (DE)
(74) Vertreter: Müller-Boré & Partner Patentanwälte
(86) Internationale Anmeldenummer: EP0001366
(87) Internationale Veröffentlichungsnummer: WO00049101

(56) Entgegenhaltungen:
- WO-A-90/07607
- DE-C- 565 786
- CHEMICAL ABSTRACTS, vol. 81, no. 14, 7. Oktober 1974 (1974-10-07) Columbus, Ohio, US; abstract no. 79637s, S.F. KHOKHLOV ET AL.: "Oxidation of vegetable oil under foam conditions. I." Seite 107; Spalte 1; XP002139768 & VOP. KHIM. KHIM. TEKHNOL., Bd. 30, 1973, Seiten 31-36,
- DATABASE WPI Section Ch, Week 198150 Derwent Publications Ltd., London, GB; Class G02, AN 1981-92447D XP002139769 -& SU 810 748 A (DNEPR CHEM TECH), 7. März 1981 (1981-03-07)
- DATABASE WPI Section Ch, Week 197528 Derwent Publications Ltd., London, GB; Class J03, AN 1975-47269W XP002139770 -& SU 426 965 A (NOVCH ELECTRODE WKS), 12. Dezember 1974 (1974-12-12)

## Beschreibung

Die Erfindung betrifft ein kontinuierliches Verfahren zur Herstellung eines vernetzten Bindemittels auf Basis ungesättigter Fettsäuren und/oder Fettsäureester, ein durch das Verfahren herstellbares elastisches Bindemittel und die Verwendung des elastischen Bindemittels.

Bindemittel aus natürlichen Ölen bedürfen heute einer relativ aufwendigen Fertigung. Für die Herstellung des Linoleumbindemittels sind bis heute beispielsweise folgende grundsätzlich verschiedene Verfahren bekannt:
- Bedfordprozeß (bei allen Linoleumproduzenten gegenwärtig eingesetztes Verfahren)
- Taylorprozeß (Schwarzöl)
- Nesselverfahren (Hängende Nesselbahnen werden mit Leinöl übergossen)
- Berieselungsverfahren
- Düneberg-Verfahren (Emulsionsverfahren)
(Zu den ersten vier Verfahren vgl. "Das Linoleum und seine Fabrikation", Autor Felix Fritz, Verl. Alfred Weber nachf. Berlin, 1925; zu Düneberg-Verfahren, vgl.
DE 47 21 11)

Durch diese Verfahren wird der Ausgangsstoff für das Bindemittel, im Fall der Linoleumherstellung natürliche Öle, welche verschiedene ungesättigte Fettsäuren und/oder Fettsäureester enthalten, oxidiert und vernetzt. Der zur Oxidation benötigte Sauerstoff muß in allen Fällen im Überschuß eingesetzt werden, so daß stets nur ein Teil des eingesetzten Sauerstoffes für die Umsetzung verwendet wird und immer große Luftmengen durch den Prozeß geschleust werden müssen, wodurch auch große Mengen Abluft entstehen. Zwar handelt es sich bei den Emissionen stets um Abbauprodukte pflanzlicher Fette, also um Emissionen natürlichen Ursprungs, sie werden aber als lästige Gerüche empfunden. Deshalb werden heute für die Reinigung der Abluft aufwendige Entsorgungsanlagen, beispielsweise Nachverbrennungsanlagen, benötigt.

Ferner sind alle im Stand der Technik bekannten Verfahren dahingehend nachteilig, daß diese immer nur diskontinuierlich laufen ("Batchverfahren") und eine lange Prozeßzeit pro Charge benötigen. Darüber hinaus müssen für diese Verfahren immer große Anlagen oder mehrere kleine Anlagen angeschafft werden, um niedrige Herstellungskosten für die Bindemittel zu erzielen.

Der im allgemeinen verwendete Bedfordprozeß ist weiterhin mit einer ungünstigen Chargendauer von bis zu ca. 20 Stunden verbunden, so daß unabhängig von der Auftragslage des produzierenden Untemehmens mindestens ein 3-Schichtbetrieb erforderlich ist.

In Chemical Abstracts (Vol. 81, no. 14, 7. Oktober 1974) wird ein Verfahren beschrieben, bei dem pflanzliches Öl mittels Durchblasen von Luft in Gegenwart eines Katalysators oxidiert wird. Bei diesem exothermen Verfahren findet eine thermische Zersetzung des pflanzlichen Öls und dessen Oxidationsprodukten statt. Wenn die Oberfläche der Öl-Luft-Grenzfläche durch Aufschäumen vergrößert wird, nimmt die Zersetzung ab und das Verfahren wird beschleunigt. Optimale Reaktionsbedingungen in diesem Verfahren sind 120°C, eine Durchflußrate von 0,6 m/sec und eine Konzentration eines Pb-Mn-Sikkativs von 0,6%. In Database WPI Section Ch (Week 198150 Derwent Publications Ltd., London, GB; Class G02, AN 1981-92447D XP002139769) wird ein Verfahren zur Oxidation von Sonnenblumenöl beschrieben, umfassend das Vorheizen des Sonnenblumenöls auf 140°C, das Beschicken in ein Gefäß und das Durchblasen von Luft unter Aufschäumen, wodurch das Sonnenblumenöl oxidiert wird.

Somit liegt der vorliegenden Erfindung die Aufgabe zugrunde, ein Herstellungsverfahren für Bindemittel bereitzustellen, welches kürzere Prozeßzeiten und eine bessere Ausnutzung des Sauerstoffes aufweisen soll, sowie weniger Abluft verursachen soll.

Diese Aufgabe wird durch die in den Ansprüchen gekennzeichneten Ausführungsformen gelöst.

Insbesondere wird ein Verfahren zur Herstellung eines vernetzten Bindemittels auf Basis ungesättigter Fettsäuren und/oder Fettsäureester bereitgestellt, welches das mindestens einmalige Aufschäumen eines ungesättigte Fettsäuren und/oder Fettsäureester enthaltenden Gemisches mit Sauerstoff oder einem Sauerstoff-haltigen Gasgemisch und Umsetzung der im Gemisch enthaltenen ungesättigten Fettsäuren und/oder Fettsäureester durch Oxidation und Vernetzung zum Erhalt des vemetzten Bindemittels umfaßt, wobei das Gemisch zuerst aufgeschäumt wird und dann unter Druck gesetzt wird.

Die in dem umzusetzenden Gemisch enthaltenen ungesättigten Fettsäuren und/oder Fettsäureester entstammen meist natürlichen, insbesondere pflanzlichen Ölen, wie beispielsweise Leinöl. Das ungesättigte Fettsäuren und Fettsäureester enthaltende Reaktionsgemisch wird daher im folgenden auch "Öl" genannt. Der Begriff Sauerstoff-haltiges Gasgemisch soll im folgenden auch reinen Sauerstoff umfassen.

Durch das Aufschäumen des Gemisches vergrößert sich die Grenzfläche bzw. die Kontaktfläche zwischen Öl und Luftsauerstoff erheblich. Dadurch kann eine raschere und gleichmäßigere Wechselwirkung des Luftsauerstoffs mit der Öloberfläche stattfinden, so daß mehr Sauerstoffmoleküle pro Zeiteinheit auf ungesättigte Bindungen der ungesättigten Fettsäuren und/oder Fettsäureester treffen.

Die Schaumbildung bzw. das Aufschäumen bzw. das mechanische Dispergieren mit dem Sauerstoff-haltigen Gasgemisch des die ungesättigten Fettsäuren und/oder Fettsäureester enthaltenden Gemisches kann auf dreierlei Weise realisiert werden:
1. Das Gemisch wird durch ein Rohrsystem aus Stahl geleitet, in welches ein oder mehrere hintereinander positionierte statische Mischer integriert sind, welche durch Einspeisen eines Sauerstoff-haltigen Gasgemisches daraus einen fein dispergierten und stabilen Schaum herstellen.
2. Anstelle der statischen Mischer können auch dynamische Mischer (Rotor-Stator-Prinzip), wie Schlagschaummixer, verwendet werden.
3. Das Pflanzenöl kann auch chargenweise in einem Rührwerkskessel mit Dissolver und Mixerscheibe derart geschlagen werden, daß ein feinzelliger Schaum entsteht, der in den kontinuierlichen Gesamtprozess eingespeist wird.

Als statische Mischer sind beispielsweise die Typen SMV, SMF, SMXL, SMR und SMX der Firma Sulzer, oder der Typ Primixer der Firma Striko oder der Typ Primixer Quarto der Firma Fluitec CSE-Mischer bevorzugt. Besonders bevorzugt ist der Mischer Typ SMX der Firma Sulzer. Als dynamische Mischer werden vorzugsweise die Typen Eco Mix, Food Mix, Top Mix, Uni Mix oder Compact Mix der Firma Hansa verwendet, wobei die Typen Top Mix oder Uni Mix der Firma Hansa besonders bevorzugt sind. Bei statischen Mischern ist eine Umlaufgeschwindigkeit von 2 bis 100 l/min, vorzugsweise von 5 bis 50 l/min, bevorzugt.

Die Reaktionsgeschwindigkeit der Oxidation und Vemetzung der im Gemisch enthaltenen ungesättigten Bindungen hängt von der Temperatur des Gemisches, gegebenenfalls zugegebenen Reaktionsbeschleunigem, aber auch von der Schaumgüte ab. Die Schaumgüte umfaßt sowohl die Feinheit der Schaumzellen als auch die Stabilität des Schaums. Je kleiner die Schaumzellen sind, desto größer ist die Kontaktfläche zwischen dem Sauerstoff-haltigen Gasgemisch und dem Öl und umso schneller findet eine Oxidation der ungesättigten Fettsäuren und/oder Fettsäureester statt bzw. wird der Sauerstoff verbraucht, und umso gleichmäßiger wird das ungesättigte Fettsäuren bzw. Fettsäureester enthaltende Gemisch oxidiert und vemetzt. Für eine kurze Umsetzungszeit ist daher ein feinzelliger Schaum bevorzugt. Besonders bevorzugt ist ein Schaum mit einem Litergewicht von 80 bis 800 g, noch bevorzugter 150 bis 500 g. Zur Beeinflussung der Schaumstruktur und der Schaumstabilität können dem Gemisch ferner grenzflächenaktive Mittel, wie beispielsweise Lecithin oder acetyliertes Lecithin, in einem Anteil von 0,1 bis 4 Gew.-%, vorzugsweise 0,5 bis 2,0 Gew.-%, bezogen auf die Gesamtmenge des Gemisches, zugefügt werden.

Gemäß einer Ausführungsform des erfindungsgemäßen Verfahrens liegt zu Beginn einer Umsetzung die Viskosität des Gemisches im allgemeinen noch im unteren Bereich, beispielsweise von 50 bis 80 mPas, so daß der entstehende Schaum noch nicht sehr stabil ist und bei einem Abfall des Drucks zerfällt. Dies hat aber den Vorteil, daß durch den Zerfall des Schaums ein effektiver Austausch zwischen der verbrauchten Luft, d.h. Luft ohne Sauerstoff oder nur mit einem geringen Anteil an Sauerstoff, und neuer, unverbrauchter Luft erreicht wird. Verfahrenstechnisch wird daher vorzugsweise in sogenannten Begasungszyklen gefahren, bei denen zunächst das Gemisch mit Sauerstoff-haltigem Gasgemisch intensiv unter einem bestimmten Druck verschäumt wird und anschließend nach erfolgter Reaktion durch Druckabfall wieder entschäumt wird, so daß ein neuer Begasungszyklus gestartet werden kann, wobei das Öl vorzugsweise in einem aus Stahlrohr geführten Kreisprozeß geführt wird. Bei einem solchen Verschäumen unter Druck wird vorzugsweise der Vordruck des Öls auf 0,1 bis 15 Mpa, mehr bevorzugt 0,1 bis 5 MPa, und besonders bevorzugt 0,2 bis 2,0 MPa, und der Vordruck des Sauerstoff-haltigen Gasgemisches auf 0,15 bis 5,5 MPa, mehr bevorzugt auf 0,25 bis 2,5 MPa, geregelt bzw. gesteuert. Bevorzugt sind femer 1 bis 1000 Zyklen, besonders bevorzugt 50 bis 500 Zyklen, des Aufschäumens und Umsetzens des Öls. Dadurch ergeben sich Behandlungszeiten für das zyklische Aufschäumen und Umsetzen von 5 min bis 8 Stunden, wobei die Umsetzung in diesem Verfahrensschritt vorzugsweise nach 1 bis 6 Stunden abgeschlossen ist.

Die Geschwindigkeit der Umsetzung wird außerdem von der Temperatur des Reaktionsgemisches beeinflußt. Die Temperatur des Reaktionsgemisches beträgt während der Umsetzung vorzugsweise 10 bis 150°C, besonders bevorzugt 50 bis 120°C. Da die Umsetzung exotherm verläuft, muß der Schaum zur Kontrolle der Umsetzung gegebenenfalls gekühlt werden.

Als das Sauerstoff-haftige Gasgemisch wird erfindungsgemäß vorzugsweise Luft verwendet. Der Luftverbrauch beträgt bevorzugt 5 bis 100 Gew.-%, besonders bevorzugt 15 bis 50 Gew.-%, bezogen auf das Öl. Es kann aber auch reiner Sauerstoff zum Aufschäumen verwendet werden. Dadurch wird der Vemetzungsprozeß weiter beschleunigt und es ist eine geringere Austauschrate des Gases aus dem Schaum nötig. Zu beachten ist in diesem Fall, daß durch die größere Umsetzungsgeschwindigkeit die Systemkühlung gegebenenfalls intensiviert werden muß bzw. der Vemetzungsprozeß bei noch geringeren Temperaturen durchgeführt werden kann. Diese Ausführungsform weist neben der verkürzten Umsetzungszeit auch den Vorteil auf, daß besonders wenig Abluft anfällt.

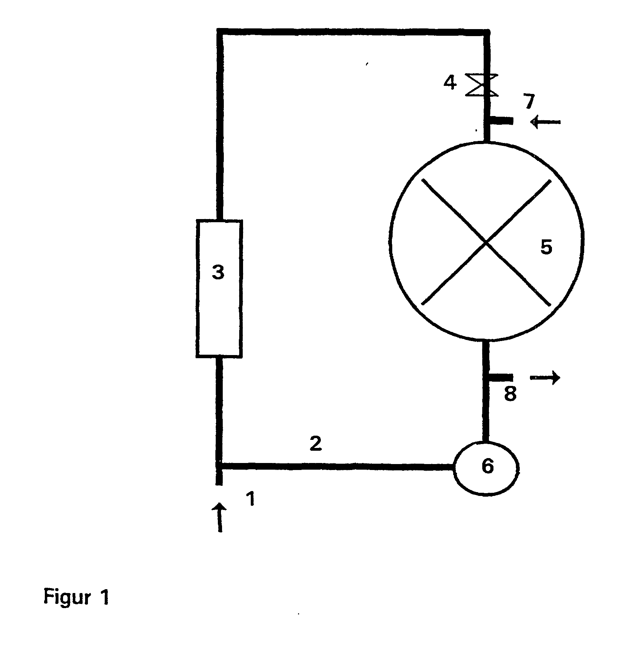

Figur 1 zeigt einen schematischen Aufbau einer Anlage zur Durchführung des erfindungsgemäßen Verfahrens gemäß einer bevorzugten Ausführungsform:
Das Öl wird durch den Einlaß 7 in das Rohrsystem 2 eingespeist und mittels der Pumpe 6 dem statischen oder dynamischen Mischer 3 zugeführt. Das Sauerstoff-haltige Gasgemisch bzw. das Reaktionsgas wird durch das Einspeisungsventil 1 in das Rohrsystem 2 eingespeist. Im statischen oder dynamischen Mischer 3 wird das Gemisch mit dem Reaktionsgas aufgeschäumt und durch das Rohrsystem über ein Druckhalteventil 4 in den Reaktionskessel 5, welcher mit einem Rührwerk versehen ist, eingeleitet. Durch eine Pumpe 6 wird das teilweise umgesetzte Gemisch wieder dem Mischer 3 zugeführt, so daß ein neuer Zyklus beginnen kann. Nach Erreichen des gewünschten Umsetzungsgrads wird das umgesetze Öl durch den Auslaß 8 aus der Anlage ausgebracht.

Gemäß einer anderen Ausführungsform der vorliegenden Erfindung kann sich an dieses Verfahren des kontinuierlichen Verschäumens eine Endkochphase bzw. Nachkochphase des bereits stark eingedickten Reaktionsgemisches bzw. umgesetzten Öls anschließen. Diese Endkochphase kann (1) als reaktionsberuhigende Phase in einem Reaktionskessel mit Rührwerk diskontinuierlich erfolgen und wird vorzugsweise während 10 bis 180 min, besonders bevorzugt während 20 bis 120 min, bei einer Temperatur von 40 bis 180°C, besonders bevorzugt von 60 bis 140°C, durchgeführt. Die Endkochphase kann (2) aber auch mittels eines Kochextruders mit Doppelschnecke und Stauchelementen unter erhöhtem Extrudersystemdruck auf kontinuierlichem Wege noch effizienter durchgeführt werden, wobei (a) das Gas-Öl-Gemisch mittels Extrudertechnologie kontinuierlich komprimiert werden kann oder (b) das eingedickte gasfreie Öl unter Zugabe organischer Peroxide im Doppelschneckenextruder vernetzt werden kann. Je nach geforderter Rheologie kann ein Rest Peroxidanteil in der Masse verbleiben, welcher dann mittels Temperaturerhöhung vollständig zur Zersetzung gebracht und so das Bindemittel vollständig vemetzt wird. Beispiele für anwendbare Peroxide sind Didecanoylperoxid (DP), Dimyristylperoxid-dicarbonat (MYPC), t-Butylperoxypivalat (DBPPI), t-Butylperoxy-2-ethylhexanoat, 2,5-Dimethyl-2,5-di(t-butylperoxy)hexan (DHBP) und Di-tbutylperoxid (DTBP). Diese Peroxide werden vorzugsweise in einer Konzentration von 0,05 bis 1,0 Gew.-%, besonders bevorzugt 0,1 bis 0,7 Gew.-%, und bei Temperaturen von 80 bis 200°C eingesetzt. Gemäß dieser Ausführungsform kann das abschließende Vernetzen in zwei Schritten erfolgen, wobei
- zunächst das Reaktionsgemisch vorzugsweise unter Teilvemetzung auf eine Temperatur erwärmt wird, bei welcher das Peroxid eine im wesentlichen ausreichend lange Stabilität aufweist, und dann
- das vorzugsweise vorvernetzte Reaktionsgemisch in einer geeigneten Vorrichtung bei einer Temperatur verpreßt wird, bei welcher die Halbwertszeit des Peroxids derart verringert ist, daß gleichzeitig eine durch das Peroxid initiierte im wesentlichen vollständige Vernetzung erfolgt.

Gegebenenfalls kann die Umsetzung durch Tauchen und Kühlen des Reaktionsgemisches in Wasser zum Abbruch gebracht werden.

Vor dem Vemetzungsprozeß mittels Schäumen mit einem Sauerstoff-haltigen Gasgemisch kann gemäß einer weiteren Ausführungsform eine Vorvemetzung stattfinden, so daß eine Mehrstufenvemetzung möglich ist. So zeigte sich eine Kombination aus UV-Strahlen-induzierter Vemetzung unter Zuhilfenahme von UV-Aktivatoren und einer anschließenden Oxidation und Vernetzung mittels eines Sauerstoff-haltigen Gasgemisches außerordentlich effektiv. Die Prozeßzeiten können auf diesem Wege weiter verkürzt werden.

Das die ungesättigten Fettsäuren und/oder Fettsäureester enthaltende Gemisch kann ferner vorzugsweise vor dem Aufschäumen getempert werden. Vorzugsweise erfolgt auch dieser Schritt kontinuierlich. Das Gemisch wird dabei über einer Zeitdauer von 1 bis 90 Minuten, vorzugsweise 20 bis 60 Minuten, bei einer Temperatur von 70 bis 300 °C, vorzugsweise von 100 bis 190°C, vorgetempert. Dieses Tempem, vorzugsweise mittels eines Durchlauferhitzers, bewirkt die Zerstörung gegebenenfalls im Reaktionsgemisch vorhandener natürlicher oder künstlicher Oxidationsstabilisatoren, wie Tocopherol, Phosphatide und Schleimstoffe.

Die Eigenschaften des Bindemittels werden zusätzlich durch die Zusammensetzung des ungesättigte Fettsäuren und/oder Fettsäureester enthaltenden Gemisches beeinflußt und können durch eine geeignete Auswahl der Komponenten des Gemisches in verschiedene Richtungen variiert werden. Die ungesättigten Fettsäuren und/oder Fettsäureester werden im allgemeinen in Form natürlich vorkommender, insbesondere pflanzlicher Öle eingesetzt. Jedes pflanzliche Öl (Triglyceridester) verfügt über eine spezifische Zusammensetzung verschiedener gebundener Fettsäurereste, welche wiederum eine verschiedene Anzahl und Stellung vernetzbarer Doppelbindungen aufweisen. Gemäß der vorliegenden Erfindung wird vorzugsweise Leinöl verwendet, welches je nach Herkunft die folgende Zusammensetzung aufweist:

| | |
|---|---|
| Palmitinsäure 4 - 6,5 Gew.-% | vorzugsweise 5 - 6 Gew.-% |
| Stearinsäure 2,5 - 5,0 Gew.-% | vorzugsweise 3 - 4 Gew.-% |
| ölsäure 16 - 23 Gew.-% | vorzugsweise 18 - 21 Gew.-% |
| LinoJsäure 13 - 18 Gew.-% | vorzugsweise 15 - 17 Gew.-% |
| Linolensäure 48 - 60 Gew.-% | vorzugsweise 52 - 58 Gew.-% |
| Jodzahl 175 - 200 | vorzugsweise 185 - 195 |
| Säurezahl 0,8 - 4,0 | vorzugsweise 1,5 - 3,0 |

Auch andere, trocknende Öle und Mischungen aus trocknenden und halbtrocknenden Ölen zeigen beachtliche Ergebnisse. Als weitere Beispiele neben Leinöl können Iberisch Drachenkopföl, Tung Öl, Oiticica Öl, Sojaöl, Rapsöl, Tallöl, Sonnenblumenöl und Castor-Öl genannt werden. Diese Öle können einzeln oder als Gemisch miteinander verwendet werden und werden in folgenden Mengenanteilen, jeweils in Gewichtsprozent (Gew.-%) gemäß des erfindungsgemäßen Verfahrens eingesetzt:

| | Verwendungsbereich | Bevorzugter Verwendungssbereich |
|---|---|---|
| Leinöl | 1 bis 100 Gew.-% | 5 bis 85 Gew.-% |
| Iberisch Drachenkopföl | 1 bis 100 Gew.-% | 5 bis 85 Gew.-% |
| Tung Öl | 1 bis 100 Gew.-% | 5 bis 85 Gew.-% |
| Oiticica Öl | 1 bis 100 Gew.-% | 5 bis 85 Gew.-% |
| Sojaöl | 5 bis 60 Gew.-% | 10 bis 30 Gew.-% |
| Rapsöl | 5 bis 60 Gew.-% | 10 bis 30 Gew.-% |
| Tallöl | 5 bis 60 Gew.-% | 10 bis 50 Gew.-% |
| Sonnenblumenöl | 5 bis 60 Gew.-% | 10 bis 30 Gew.-% |
| Castor-Öl | 5 bis 60 Gew.-% | 10 bis 30 Gew.-% |

In das Gemisch können ferner Harze, wie Kopalharz, Balsamharz, Kohlenwasserstoffharz, Harzester oder hydrierte Harze, in einem Anteil bis 30 Gew.-% eingeschmolzen werden, wenn das Öl eine Viskosität von 50 bis 100.000 mPas, vorzugsweise 50 bis 30000 mPas, mehr bevorzugt 8000 bis 25000 mPas, erreicht hat. Bevorzugt sind dabei Kopalharz in einem Anteil von 0,5 bis 8 Gew.-%, vorzugsweise 1 bis 4 Gew.-%, Balsamharz in einem Anteil von 1 bis 22 Gew.-%, vorzugsweise 8 bis 15 Gew.-%, Kohlenwasserstoffharz in einem Anteil von 0,5 bis 10 Gew.-%, vorzugsweise 3 bis 7 Gew.-%, und Tallharz in einem Anteil von 0,5 bis 12 Gew.-%, vorzugsweise 3 bis 8,5 Gew.-%.

Als weitere Zusatzstoffe können dem Gemisch zur Beschleunigung der Oxidation und Vemetzung Sikkative, d.h. Trockenstoffe, wie Co-, Mn- und Pb-Verbindungen, und/oder Kombinationstrockenstoffe, wie Fe-, Ce-, Zn-, Zr-, B- und Ba-Verbindungen, und/oder Hilfsmittel, wie Triallylcyanurat, Pentaerythrit und Dipentaerythrit, zugefügt werden. Diese Zusatzstoffe beschleunigen die Oxidation des Öls weiter. Bevorzugt sind dabei folgende Beschleuniger in den angegebenen Verwendungsbereichen:

| | Einheit | Verwendungsbereich | Bevorzugter Verwendungsbereich |
|---|---|---|---|
| Mn-Octoat | [Gew.-%] | 0,005 bis 0,7 | 0,01 bis 0,4 |
| Co-Octoat | [Gew.-%] | 0,005 bis 0,7 | 0,01 bis 0,4 |
| Pb-Octoat | [Gew.-%] | 0,005 bis 0,7 | 0,01 bis 0,4 |
| NaBO₂ | [Gew.-%] | 0,0001 bis 0,05 | 0,001 bis 0,01 |
| Zn-Stearat | [Gew.-%] | 0,01 bis 1,0 | 0,1 bis 0,5 |
| Triallylcyanurat | [Gew.-%] | 0,05 bis 1,0 | 0,1 bis 0,5 |
| Pentaerythrit | [Gew.-%] | 0,05 bis 2,0 | 0,1 bis 1,0 |
| Dipentaerythrit | [Gew.-%] | 0,05 bis 2,0 | 0,1 bis 1,0 |

Gemäß einer weiteren Ausführungsform der vorliegenden Erfindung kann die Vemetzungsreaktion in Emulsion, sowohl Öl-in-Wasser- als auch Wasser-in-Öl-Emulsion, durchgeführt werden.

Die Gesamtdauer des erfindungsgemäßen Herstellungsverfahren beträgt 2 bis 9 Stunden, bevorzugt 3 bis 6 Stunden.

Die Erfindung betrifft ferner ein durch das erfindungsgemäße Verfahren herstellbares vemetztes Bindemittel. Das erfindungsgemäße Bindemittel weist trotz Vemetzung noch einen Anteil an ungesättigten Bindungen auf, beispielsweise einer lodzahl von 20 bis 100 entsprechend, und ist elastisch. Derartige Bindemittel finden beispielsweise als Linoleum-Zement in der Linoleumherstellung Verwendung. Das erfindungsgemäße Bindemittel kann mittels der in der Kunststoffindustrie üblichen Vorrichtungen, wie Innenkneter, Extruder, Walzwerke oder Kalander, compoundiert und verarbeitet werden.

Das Bindemittel weist vorzugsweise einen Schmelzindex ("melt flow index", MFI) von 0,02 bis 25 ml/24s, vorzugsweise von 0,4 bis 15 ml/24s, gemessen bei 60°C während 24 Sekunden, ein komplexes Schubmodul von 1 bis 250 kPa, vorzugsweise von 10 bis 120 kPa, und einen Verlustfaktor von 0,1 bis 30, vorzugsweise von 1 bis 15, bei einer oszillierenden Deformation von γ=0,09657 auf.

Die vorliegende Erfindung betrifft femer die Verwendung des erfindungsgemäßen Bindemittels als Kunststoffersatzprodukt und die Verwendung des erfindungsgemäßen Bindemittels als Bindemittelzement für Linoleumflächengebilde.

### Beispiele

Das erfindungsgemäße Verfahren wurde unter Verwendung eines statischen Mischers (Typ SMX der Firma Sulzer) und unter den in den Tabellen 1 bis 3 angebenen Bedingungen durchgeführt. Die Umlaufgeschwindigkeit durch den Mischer betrug in allen Beispielen 28,5 Liter pro Minute, der Aufschäum/Umsetzungschritt wurde in allen Beispielen 350 Zyklen durchgeführt. Als Sauerstoff-haltiges Gasgemisch wurde Luft eingesetzt. In der Tabelle 1 weicht die Summe der Mengenangaben leicht von 100 Gew.-% ab, da die Sikkative nur in geringen Mengen eingesetzt werden und sich dadurch Rundungsfehler ergeben.
Die rheologischen Eigenschaften der aus den Beispielen 1 bis 3 erhaltenen Bindungsmittel wurden mittels rheologischer Messungen an den viskoelastischen Körpern mittels oszillierender E-Modulmessung bei einer Deformation von γ = 0,09657 bestimmt. Die Ergebnisse sind in Tabelle 3 gezeigt.

**Tabelle 1**

| | Einheit | Beispiel 1 | Beispiel 2 | Beispiel 3 |
|---|---|---|---|---|
| **Öl** | | | | |
| Leinöl | [Gew.-%] | 70,5 | 82 | 53 |
| Tung Öl | [Gew.-%] | --- | --- | 20 |
| Sojaöl | [Gew.-%] | --- | --- | 10 |
| Tallöl | [Gew.-%] | 29 | --- | --- |

| **Beschleuniger** | | | | |
|---|---|---|---|---|
| Mn-Octoat | [Gew.-%] | --- | --- | 0,015 |
| Co-Octoat | [Gew.-%] | --- | 0,01 | --- |
| Zn-Stearat | [Gew.-%] | --- | --- | 0,01 |

| **Harz** | | | | |
|---|---|---|---|---|
| Balsamharz | [Gew.-%] | --- | 15 | 12,5 |
| Kopalharz | [Gew.-%] | --- | 3 | 2 |
| KW-Harz | [Gew.-%] | --- | --- | 2,5 |

**Tabelle 2**

| | Einheit | Beispiel 1 | Beispiel 2 | Beispiel 3 |
|---|---|---|---|---|
| **Vortemperung Ölgemisch** | | | | |
| Zeit | [min] | 90 | 40 | 40 |
| Temperatur | [°C] | 140 | 150 | 145 |

| **Verfahrensparameter** | | | | |
|---|---|---|---|---|
| Vordruck Öl-Gemisch | [kPa] | 420 | 420 | 410 |
| Vordruck Luft | [kPa] | 650 | 620 | 600 |
| Temperatur Ölkreislauf | [°C] | 74 | 78 | 75 |
| Litergewicht Ölschaum | [kg/l] | 0,405 | 0,360 | 0,350 |
| Gesamt-Luftverbrauch | [kg] | 2,8 | 2,85 | 3,1 |
| Behandlungszeit Schäumen | [min] | 255 | 165 | 145 |
| Ölviskosität bei Harzzugabe | [mPas] | --- | 18.000 | 19.500 |
| Dauer der Endkochphase | [min] | 115 | 85 | 70 |
| Temperatur Endkochphase | [°C] | 145 | 135 | 135 |
| Gesamtdauer des Bindemittelherstellungsverfahrens | [min] | 460 | 290 | 255 |

**Tabelle 3**

| | Einheit | Beispiel 1 | Beispiel 2 | Beispiel 3 |
|---|---|---|---|---|
| Schmelzindex (60°C/24 s) | [ml/24s] | 3,4 | 5,1 | 4,2 |
| Komplexes Schubmodul | [kPa] | 41,5 | 32,1 | 43,5 |
| Verlustfaktor | | 6,83 | 5,32 | 6,48 |

## Patentansprüche

1. Kontinuierliches Verfahren zur Herstellung eines vernetzten Bindemittels auf Basis ungesättigter Fettsäuren und/oder Fettsäureester, umfassend das mindestens einmalige Aufschäumen eines ungesättigte Fettsäuren und/oder Fettsäureester enthaltenden Gemisches mit Sauerstoff oder einem Sauerstoff-haltigen Gasgemisch und Umsetzung der im Gemisch enthaltenen ungesättigten Fettsäuren und/oder Fettsäureester durch Oxidation und Vemetzung zum Erhalt des vemetzten Bindemittels, wobei das Gemisch zuerst aufgeschäumt wird und dann unter Druck gesetzt wird.

2. Verfahren nach Anspruch 1, wobei das Fettsäuren und Fettsäureester enthaltende Gemisch zu einem Schaum mit einem Litergewicht von 80 bis 800 g aufgeschäumt wird.

3. Verfahren nach Anspruch 1 oder 2, wobei das ungesättigte Fettsäuren und/oder Fettsäureester enhaltende Gemisch vor der Umsetzung kontinuierlich getempert wird.

4. Verfahren nach einem der vorhergehenden Ansprüche, wobei die Umsetzung durch Wasser abgebrochen wird.

5. Verfahren nach einem der vorhergehenden Ansprüche, wobei vor dem Aufschäumen der Vordruck des Gemisches auf 0,1 bis 15 MPa und der Vordruck des Sauerstoffs oder Sauerstoff-haltigen Gasgemisches auf 0,15 bis 5,5 MPa eingestellt wird.

6. Verfahren nach einem der vorhergehenden Ansprüche, wobei die Oxidation und Vernetzung des Fettsäuren und/oder Fettsäureester enthaltenden Gemisches in Emulsion durchgeführt wird.

7. Verfahren nach einem der vorhergehenden Ansprüche, wobei in das Fettsäuren und/oder Fettsäureester enthaltende Gemisch während der Umsetzung und, wenn das Gemisch eine Viskosität von 50 bis 100000 mPas erreicht hat, mindestens ein Harz eingeschmolzen wird.

8. Verfahren nach einem der vorhergehenden Ansprüche, wobei mindestens ein Harz, ausgewählt aus der Gruppe, bestehend aus Kopalharz, Balsamharz, Kohlenwasserstoffharz und hydrierten Harzen, eingeschmolzen wird.

9. Verfahren nach einem der vorhergehenden Ansprüche, wobei ungesättigte Fettsäuren und/oder Fettsäureester in Form von trocknenden und halbtrocknenden Ölen eingesetzt werden.

10. Verfahren nach einem der vorhergehenden Ansprüche, wobei dem Fettsäuren und/oder Fettsäureester enthaltenden Gemisch mindestens ein grenzflächenaktives Mittel zugegeben wird.

11. Verfahren nach einem der vorhergehenden Ansprüche, wobei dem Gemisch Trockenstoffe, Kombinationstrockenstoffe und/oder Hilfmittel zugefügt werden.

12. Verfahren nach einem der vorhergehenden Ansprüche, wobei das Aufschäumen und Umsetzen als Kreisprozeß durchgeführt wird.

13. Verfahren nach einem der vorhergehenden Ansprüche, wobei nach der Umsetzung eine Endkochphase durchgeführt wird.

14. Verfahren nach Anspruch 13, wobei das Endkochen durch kontinuierliches Komprimieren des Reaktionsgemisches mittels Extrudertechnologie erfolgt.

15. Verfahren nach Anspruch 13, wobei vor dem Endkochen die Zugabe organischer Peroxide zu dem eingedickten gasfreien Reaktionsgemisch erfolgt.

16. Verfahren nach Anspruch 15, umfassend die Schritte
- Erwärmen des Reaktionsgemisches auf eine Temperatur, bei welcher das Peroxid eine im wesentlichen ausreichend lange Stabilität aufweist, und
- Verpressen des Reaktionsgemisches in einer geeigneten Vorrichtung bei einer Temperatur, bei welcher die Halbwertszeit des Peroxids derart verringert ist, daß gleichzeitig eine durch das Peroxid initiierte im wesentlichen vollständige Vernetzung erfolgt

17. Elastisches Bindemittel, herstellbar nach einem Verfahren gemäß einem der vorhergehenden Ansprüche.

18. Bindemittel nach Anspruch 17, welches bei einer Temperatur von 60°C einen Schmelzindex MFI von 0,02 bis 25 ml/24s aufweist.

19. Bindemittel nach Anspruch 17 oder 18, welches ein komplexes Schubmodul von 1 bis 250 kPa aufweist

20. Bindemittel nach einem der Ansprüche 17 bis 19, welches bei einer oszillierenden Deformation von γ = 0,09657 einen Verlustfaktor von 0,1 bis 30 aufweist.

21. Verwendung des Bindemittels nach einem der Ansprüche 17 bis 20, als Kunststoffersatzprodukt.

22. Verwendung des Bindemittels nach einem der Ansprüche 17 bis 20 als Bindemittelzement zur Herstellung von Flächengebilden aus Linoleum.

## Claims

1. Continuous process for preparing a crosslinked binder on the basis of unsaturated fatty acids and/or fatty acid esters, comprising foaming a mixture containing unsaturated fatty acids and/or fatty acid esters one or more times with oxygen or an oxygen-containing gas mixture and reacting the unsaturated fatty acids and/or fatty acid esters present in the mixture by oxidation and crosslinking to obtain the crosslinked binder, wherein the mixture is first foamed and then pressurized.

2. Process according to Claim 1, wherein the mixture containing fatty acids and fatty acid esters is foamed to a foam having a litre weight of 80 to 800 g.

3. Process according to Claim 1 or 2, wherein the mixture containing unsaturated fatty acids and/or fatty acid esters is continually heat treated before the reacting.

4. Process according to any preceding claim, wherein the reacting is discontinued by means of water.

5. Process according to any preceding claim, wherein the foaming is preceded by adjusting the pre-pressure of the mixture to 0.1 to 15 MPa and the pre-pressure of the oxygen or oxygen-containing gas mixture to 0.15 to 5.5 MPa.

6. Process according to any preceding claim, wherein the oxidation and crosslinking of the mixture containing fatty acids and/or fatty acid esters is carried out in emulsion.

7. Process according to any preceding claim, wherein the mixture containing fatty acids and/or fatty acid mixtures has at least one resin melted into it during the reacting and once the mixture has attained a viscosity of 50 to 100 000 mPas.

8. Process according to any preceding claim, wherein the at least one resin is selected from the group consisting of copal resin, balsam resin, hydrocarbon resin and hydrogenated resins.

9. Process according to any preceding claim, wherein unsaturated fatty acids and/or fatty acid esters are used in the form of drying and semidrying oils.

10. Process according to any preceding claim, wherein the mixture containing fatty acids and/or fatty acid esters has at least one surface-active agent added to it.

11. Process according to any preceding claim, wherein the mixture has primary driers, secondary driers and/or auxiliaries added to it.

12. Process according to any preceding claim, wherein the foaming and reacting is carried out as a circular operation.

13. Process according to any preceding claim, wherein the reacting is followed by a final boiling phase.

14. Process according to Claim 13, wherein the final boiling is effected by continually compressing the reaction mixture using extruder technology.

15. Process according to Claim 13, wherein the final boiling is preceded by the addition of organic peroxides to the thickened gas-free reaction mixture.

16. Process according to Claim 15, comprising the steps of
- heating the reaction mixture to a temperature at which the peroxide has an essentially sufficiently long stability, and
- pressing the reaction mixture in a suitable apparatus at a temperature at which the half-life of the peroxide is shortened to such an extent that an essentially complete crosslinking initiated by the peroxide takes place at the same time.

17. Elastic binder preparable by a process as set forth in any preceding claim.

18. Binder according to Claim 17, having an MFI melt flow index of 0.02 to 25 ml/24 s at 60°C.

19. Binder according to Claim 17 or 18, having a complex shear modulus of 1 to 250 kPa.

20. Binder according to any of Claims 17 to 19, having a loss factor of 0.1 to 30 under an oscillating deformation of γ = 0.09657.

21. Use of the binder according to any of Claims 17 to 20, as a plastic substitute.

22. Use of the binder according to any of Claims 17 to 20, as a binder cement for preparing sheetlike structures of linoleum.

## Revendications

1. Procédé continu de production d'un liant réticulé à base d'acides gras insaturés et/ou de leurs esters, qui consiste à faire mousser au moins une fois un mélange contenant des acides gras insaturés et/ou des esters de ces acides avec l'oxygène ou un mélange gazeux contenant de l'oxygène et à faire réagir les acides gras insaturés et/ou leurs esters contenus dans le mélange par oxydation et réticulation pour obtenir le liant réticulé, le mélange étant tout d'abord amené à mousser, puis mis sous pression.

2. Procédé suivant la revendication 1, dans lequel le mélange contenant des acides gras et des esters d'acides gras est amené à mousser pour former une mousse ayant un poids au litre de 80 à 800 g.

3. Procédé suivant la revendication 1 ou 2, dans lequel le mélange contenant des acides gras non saturés et/ou des esters de ces acides gras est continuellement étuvé avant la réaction.

4. Procédé suivant l'une des revendications précédentes, dans lequel la réaction est arrêtée par l'eau.

5. Procédé suivant l'une des revendications précédentes, dans lequel avant le moussage, la précompression du mélange est réglée à une valeur de 0,1 à 15 MPa et la précompression de l'oxygène ou du mélange gazeux contenant de l'oxygène est réglée à une valeur de 0,15 à 5,5 MPa.

6. Procédé suivant l'une des revendications précédentes, dans lequel l'oxydation et la réticulation du mélange contenant des acides gras et/ou des esters d'acides gras est conduite en émulsion.

7. Procédé suivant l'une des revendications précédentes, dans lequel au moins une résine est incorporée par fusion au mélange contenant des acides gras et/ou des esters d'acides gras pendant la réaction et lorsque le mélange a atteint une viscosité de 50 à 100 000 mPa.s.

8. Procédé suivant l'une des revendications précédentes, dans lequel au moins une résine, choisie dans le groupe comprenant la résine de copal, la colophane, une résine hydrocarbonée et des résines hydrogénées, est incorporée à l'état fondu.

9. Procédé suivant l'une des revendications précédentes, dans lequel des acides gras non saturés et/ou des esters de ces acides gras sont utilisés sous forme d'huiles siccatives et semi-siccatives.

10. Procédé suivant l'une des revendications précédentes, dans lequel au moins un agent tensio-actif est ajouté au mélange contenant des acides gras et/ou des esters d'acides gras.

11. Procédé suivant l'une des revendications précédentes, dans lequel des siccatifs, des siccatifs en combinaison et/ou des substances auxiliaires sont ajoutés au mélange.

12. Procédé suivant l'une des revendications précédentes, dans lequel le moussage et la réaction sont conduits comme un procédé cyclique.

13. Procédé suivant l'une des revendications précédentes, dans lequel une phase de cuisson finale est conduite après la réaction.

14. Procédé suivant la revendication 13, dans lequel la cuisson finale est effectuée par compression continue du mélange réactionnel au moyen de la technologie d'extrusion.

15. Procédé suivant la revendication 13, dans lequel avant la cuisson finale, on effectue l'addition de peroxydes organiques au mélange réactionnel dégazé épaissi.

16. Procédé suivant la revendication 15, comprenant les étapes de
- chauffage du mélange réactionnel à une température à laquelle le peroxyde présente une stabilité de longueur essentiellement suffisante, et
- compression du mélange réactionnel dans un dispositif approprié à une température à laquelle le temps de demi-vie du peroxyde est réduit au point de générer en même temps une réticulation essentiellement totale initiée par le peroxyde.

17. Liant élastique, pouvant être produit par un procédé suivant l'une quelconque des revendications précédentes.

18. Liant suivant la revendication 17, qui présente, à une température de 60°C, un indice de fluidité MFI de 0,02 à 25 ml/24 s.

19. Liant suivant la revendication 17 ou 18, qui présente un module de cisaillement complexe de 1 à 250 kPa.

20. Liant suivant l'une des revendications 17 à 19, qui présente un facteur de perte de 0,1 çà 30 pour une déformation oscillante γ = 0,09657.

21. Utilisation du liant suivant l'une des revendications 17 à 20 comme produit de remplacement de matières synthétiques.

22. Utilisation du liant suivant l'une des revendications 17 à 20 comme ciment de liant pour la fabrication de corps plans en linoléum.
